# EUROPEAN PATENT APPLICATION

(11) **EP 4 835 853 A1**
(43) Date of publication of application: **04.11.2026**
(21) Application number: 25224060.1
(22) Date of filing: 16.12.2025
(51) Int. Cl.: G07F 17/12, G06Q 10/02, G06Q 30/0645

(54) **LOCKER SYSTEM AND LOCKER MANAGEMENT METHOD**

(30) Priority: 29.04.2025 KR 20250056372; 27.10.2025 KR 20250157109
(71) Applicant: DRAX Inc., Anyang-si, Gyeonggi-do 14086 (KR)
(72) Inventor: YOO, Seon Kyung, Seoul (KR)
(74) Representative: Mewburn Ellis LLP

(57) **Abstract**

Provided is a locker system. The locker system that manages a plurality of lockers in a selected space includes a locker controller configured to assign an available locker among the plurality of lockers to a user, a locker detection unit configured to detect an internal state of the locker assigned to the user, and a user detection unit configured to detect a location of the user within the selected space, in which the locker controller is further configured to, based on detection results of the locker detection unit and the user detection unit, automatically return the locker assigned to the user.

## Description

### CROSS-REFERENCE TO RELATED APPLICATION

This application is based on and claims priority under 35 U.S.C. §119 to Korean Patent Application No. 10-2025-0056372, filed on April 29, 2025, in the Korean Intellectual Property Office, and Korean Patent Application No. 10-2025-0157109, filed on October 27, 2025, in the Korean Intellectual Property Office, the disclosures of which are incorporated by reference herein in their entireties.

### BACKGROUND

### 1. Field

The disclosure relates to a locker system and a locker management method.

### 2. Description of the Related Art

Generally, public facilities such as athletic centers, swimming pools, schools, libraries, and hot saunas provide a number of lockers for visitors (or users) to securely store personal items.

These lockers are typically physically limited in number, and are used by allowing multiple users to be temporarily assigned and use unoccupied lockers in the order of their visit, and then empty and return the lockers when they are finished using the facilities.

However, with conventional locker management, it is not uncommon for some users to leave the facilities after they have finished using them, without completing a return procedure for the lockers they have used due to personal carelessness or intentional neglect.

In this case, the lockers may still be in a 'busy' state in a system, even though they are available for the next user. This results in a significant reduction in the number of lockers available to users compared to the total number of lockers the facility has, causing significant degradation in the overall operational efficiency and effective utilization of the lockers.

As a result, new users of the facilities are unable to be assigned lockers because the system shows that there are no lockers available, even though a number of lockers are actually empty. Moreover, facility managers have to manually check and reset unreturned lockers on a regular basis, causing administrative burden and waste of manpower.

### SUMMARY

Provided are a locker system and a locker management system to solve the above-described problems.

Provided are a locker system and a locker management method to selectively perform a return procedure for a locker according to an internal condition of the locker when a user leaves a selected space without a separate return.

Provided are a locker system and a locker management method to automatically process a return even when a user does not separately request the return, while minimizing the return being processed against a user's intention.

Additional aspects will be set forth in part in the description which follows and, in part, will be apparent from the description, or may be learned by practice of the presented embodiments of the disclosure.

According to an aspect of the disclosure, a locker system manages a plurality of lockers in a selected space.

The locker system includes a locker controller configured to assign an available locker among the plurality of lockers to a user, a locker detection unit configured to detect an internal state of the locker assigned to the user, and a user detection unit configured to detect a location of the user within the selected space, in which the locker controller is further configured to, based on detection results of the locker detection unit and the user detection unit, automatically return the locker assigned to the user.

The user detection unit may be further configured to detect whether the user leaving the selected space deviates from a location.

The locker controller may be further configured to process the locker assigned to the user into a returned state in which the locker is assignable to another user, in response to the locker detection unit detecting an internal state of the locker as an empty state and the user detection unit detecting the user's location deviation.

The locker controller may be further configured to maintain the locker assigned to the user in an existing state for at least a specific time, in response to the locker detection unit detecting an internal state of the locker as a storage state in which an object is stored and the user detection unit detecting the user's location deviation.

The locker controller may be further configured to provide the user or an administrator with guidance information indicating that the object is stored in the locker.

The locker controller may be further configured to process the locker into the returned state after an elapse of a specific time from the providing of the guidance information.

The locker controller may be further configured to maintain the locker assigned to the user in an existing state for at least a specific time, in response to the locker detection unit detecting an internal state of the locker as an empty state and the user detection unit not detecting the user's location deviation.

The locker detection unit may include at least one of a camera module and a distance measurement sensor.

The user detection unit may be further configured to directly detect a user's location through a terminal carried by the user or indirectly detect the user's location through a facility in the selected space.

The user detection unit may be further configured to detect the user's location deviation, based on the user's location detected through the terminal, in response to the user leaving the selected space by a specific distance.

The facility may include an access device that detects exit information of the user, and

The user detection unit may be further configured to detect a location deviation of the user based on the exit information detected by the access device.

The facility may include exercise equipment configured to detect exercise information of the user, and the user detection unit may be further configured to detect a location deviation of the user based on the exercise information detected by the exercise equipment.

According to another aspect of the disclosure, a locker management method for managing a plurality of lockers in a selected space includes detecting an internal state of a locker assigned to a user and detecting a location of the user and automatically processing whether the locker is returned, based on a result of detecting the internal state of the locker and a result of detecting the location of the user.

The detecting of the internal state of the locker may include detecting whether the internal state of the locker is an empty state, and the detecting of the location of the user may include detecting whether the user is in a deviation state of deviating from a selected space.

The automatically processing may include processing the locker assigned to the user into a returned state in which the locker is assignable to another user, in response to the locker being detected as being in the empty state and the user being detected as being in the deviation state, maintaining the locker assigned to the user in an existing state for at least a specific time, in response to the internal state being detected as being a storage state in which an object is stored and the user being detected as being in the deviation state, and maintaining the locker assigned to the user in the existing state for at least a specific time, in response to the locker being detected as being in the empty state and the user being detected as being in a stay state in which the user remains in the selected space.

The locker management method may further include providing the user or an administrator with guidance information indicating that the object is stored in the locker, in response to the object being in the storage state and the user being detected as being in the deviation state.

Other aspects, features, advantages, and advantages other than those described above will become apparent from the following figures, claims, and the detailed description of the disclosure.

These general and specific aspects may be carried out using a system, a method, a computer program, or any combination of thereof.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 schematically illustrates a locker system according to an embodiment;
FIG. 2 is a view for describing a locker system according to an embodiment;
FIG. 3 is a view for describing operation of a locker controller of the locker system of FIG. 2;
FIG. 4 is a flowchart for describing a process of assigning a locker in response to a user's request in a locker system according to an embodiment;
FIG. 5 is a flowchart for describing a process of returning a locker in response to a user's request in a locker system according to an embodiment;
FIG. 6 is a view for describing an example of a user detection unit of FIG. 1;
FIG. 7 is a view for describing an example of a user detection unit of FIG. 1;
FIG. 8 is a flowchart schematically showing a locker management method of a locker system according to an embodiment; and
FIG. 9 is a flowchart schematically showing a process of returning a locker after notification of a user or an administrator in a locker management method according to an embodiment.

### DETAILED DESCRIPTION

Reference will now be made in detail to embodiments, examples of which are illustrated in the accompanying drawings, wherein like reference numerals refer to like elements throughout. In this regard, the current embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, embodiments of the disclosure will be described in detail with reference to the accompanying drawings. In the drawings, like reference numerals denote like components, and sizes and thicknesses of components may be exaggerated for clarity of explanation.

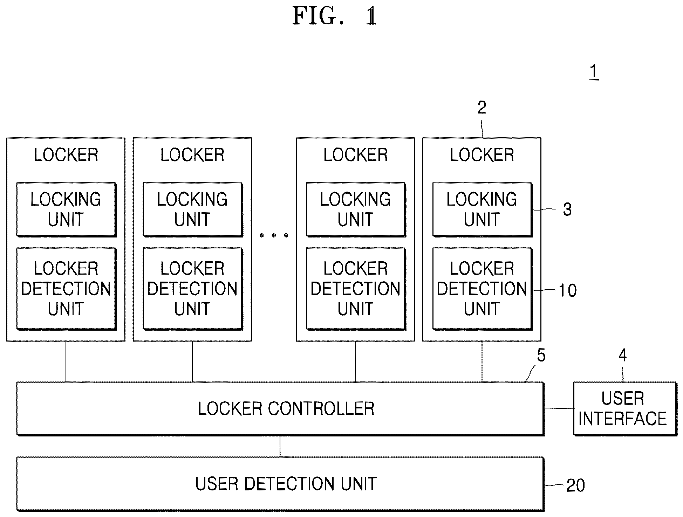

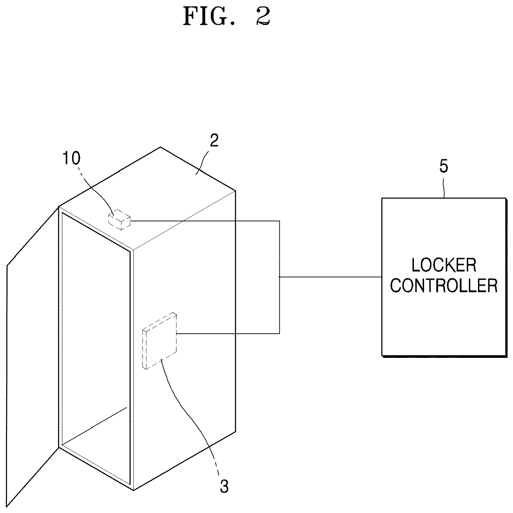

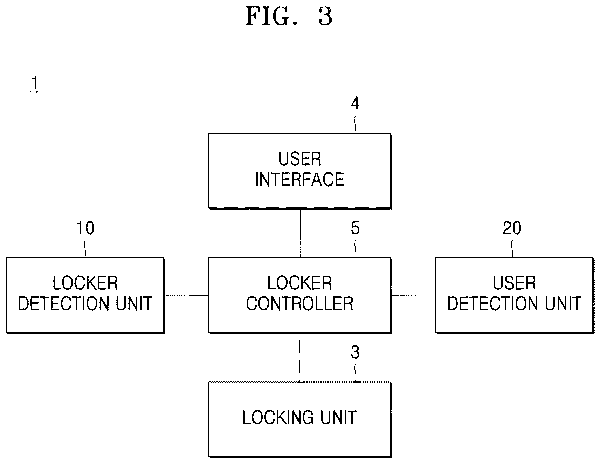

FIG. 1 schematically illustrates a locker system 1 according to an embodiment, FIG. 2 is a view for describing the locker system 1 according to an embodiment, and FIG. 3 is a view for describing operation of a locker controller 5 of the locker system 1 of FIG. 2.

Referring to FIGS. 1 to 3, the locker system 1, which is a system for managing a plurality of lockers 2, may include the plurality of lockers 2 and the locker controller 5 that assigns an available locker 2 among the plurality of lockers 2 to a user.

Each of the plurality of lockers 2 may provide a storage space for storing a user's object in which a door of the locker 2 may be locked or unlocked by a locking unit 3. In other words, the locker 2 may be locked or unlocked by the locking unit 3.

The locking unit 3 may be provided on the locker 2. The locking unit 3 may be an electronic lock (or a digital lock) operating with an electrical signal. In other words, the locking unit 3 may not be a mechanical lock operating with a physical key.

The locker controller 5 may be connected to the locking unit 3. The locker controller 5 may be wiredly or wirelessly connected to the locking unit 3. For example, the locker controller 5 may be connected to the locking unit 3 wiredly, wirelessly, directly, or over a network. The locker controller 5 may control the locking unit 3 to lock or unlock the locker 2.

The locker system 1 may further include a user interface 4 for receiving a user's request. However, the user interface 4 may be an optional configuration of the locker system 1, or may be independent of the locker system 1 as needed.

The user interface 4 may receive the user's request. For example, the user interface 4 may receive a request to use the locker 2 from the user. For example, the user interface 4 may receive a request to return the locker 2 from the user.

The user interface 4 may receive the user's request in various manners. For example, the user interface 4 may receive a request from the user by at least one of touch input and voice input. The configuration of the user interface 4 is widely known, and thus a specific description thereof will be omitted.

The user interface 4 may receive user information. The user information may be obtained by any conventional method, such as direct input by the user via touch, voice, etc., biometrics, tagging a terminal 31, etc.

The locker controller 5 may be connected to the user interface 4. The locker controller 5 may be wiredly or wirelessly connected to the user interface 4. For example, the locker controller 5 may be connected to the user interface 4 wiredly, wirelessly, directly, or over a network. The locker controller 5 may receive a user's request through the user interface 4.

The locker controller 5 may assign or return the locker 2 in response to a user request received through the user interface 4.

The locker controller 5 may store information about the plurality of lockers 2. The locker controller 5 may store information about an available locker 2 among the plurality of lockers 2. The available locker 2 may be an unoccupied locker 2 that is not assigned to another user. The available locker 2 may be a locker 2 in a returned state.

The locker controller 5 may assign the locker 2 to the user and may change the assigned locker 2 to an occupied state to prevent the assigned locker 2 from being assigned to another user. The locker controller 5 may store mapping information between a number of the locker 2 and the user for the locker 2 in the occupied state.

The locker controller 5 may switch the locker 2 that is determined to be returned to the available locker 2. The locker controller 5 may update and store the mapping information to delete the mapping information between the number of the locker 2 and the user, for the available locker 2.

The locker controller 5 may include a management server (not shown). The management server may store information about the plurality of lockers 2. The management server may store information about the available locker 2 among the plurality of lockers 2. The management server may be connected via a network to other devices, such as the locker detection unit 10, the user detection unit 20, and the locking unit 3, to transmit and receive data. The management server may control the locking unit 3 based on information received from the locker detection unit 10 and the user detection unit 20.

The management server may also be connected to exercise equipment 33, an access device 32, the terminal 31, etc., via a network to enable transmission and reception of data. The management server may store a user's exercise schedule, a list of exercise equipments 33, etc., and may store user's exercise results, etc., from information received from the terminal 31 or the exercise equipment 33. However, the configuration of the locker controller 5 is not necessarily limited to the management server, and may be installed directly on the locker 2 without the management server as needed.

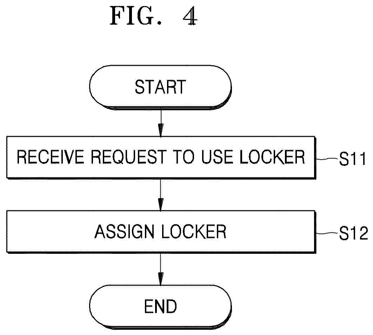

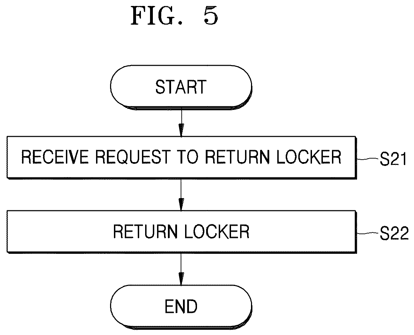

FIG. 4 is a flowchart for describing a process of assigning the locker 2 in response to a user's request in the locker system 1 according to an embodiment. FIG. 5 is a flowchart for describing a process of returning the locker 2 in response to a user's request in the locker system 1 according to an embodiment.

Referring to FIGS. 3 and 4, the locker system 1 may assign the available locker 2 to the user in response to the user's request.

The locker controller 5 may receive a request to use the locker 2 through the user interface 4, in operation S11. The locker controller 5 may receive user information along with the request to use the locker 2.

The locker controller 5 may assign available lockers 2 among the plurality of lockers 2 to the user, in operation S12. For example, the locker controller 5 may check the available lockers 2 and the user information and select one of the available lockers 2. The locker controller 5 may assign the available locker 2 to the identified user. For example, the locker controller 5 may associate the selected locker 2 with the user and update and store a database with the assigned locker 2.

The locker controller 5 may guide the user to the assigned locker 2. For example, the locker controller 5 may visually or audibly guide, through the user interface 4, a number of the locker 2 assigned to the user, etc.

The locker controller 5 may control a locked state of the assigned locker 2. For example, the locker controller 5 may control the locking unit 3 to lock or unlock the locker 2. For example, the locker controller 5 may lock or unlock the assigned locker 2 in response to a locking request or unlocking request from the user.

Referring to FIGS. 3 and 5, the locker system 1 may return the assigned locker 2 in response to the user's request.

The locker controller 5 may receive a request to return the locker 2 from the user through the user interface 4, in operation S21. The locker controller 5 may receive user information along with the request to return the locker 2.

The locker controller 5 may return the locker 2 requested to be returned, in operation S22. For example, the locker controller 5 may identify the user by comparing the received user information with user information associated with the locker 2 requested to be returned. After identifying the user, the locker controller 5 may determine to return the locker 2 assigned to that user. The locker controller 5 may proceed with the return of the locker 2 determined to be returned. For example, the locker controller 5 may switch the locker 2 into an available state, and update and store the database to delete mapping between the number of the locker 2 and the user information.

The locker controller 5 may control the locking unit 3 of the returned locker 2. For example, the locker controller 5 may control the locking unit 3 to lock or unlock the locker 2.

As described above, in the locker system 1 where the locker 2 may be returned via the user interface 4, returning the locker 2 may be relatively easy because the locker 2 may be returned without user's physical contact with the locker 2.

However, in such a locker system 1, the locker 2 may remain in an occupied (or assigned) state in case that the existing user does not separately request the return of the locker 2, even though the user has actually finished using the locker 2 and thus the locker 2 is available for another user. As a result, the number of available lockers 2 immediately available for use by actual users may be reduced compared to the total number of lockers 2 arranged within a selected space.

The plurality of lockers 2 may be arranged in a small space even within the selected space. For example, in case that the selected space is a fitness center (or gym) for exercise, an area occupied by the plurality of lockers 2 in the total area of the fitness center may be quite small to secure sufficient exercise space in the fitness center. For example, the area occupied by the plurality of lockers 2 may be within 10 % of the total area of the selected space. For example, the area occupied by the plurality of lockers 2 may be within 5 % of the total area of the selected space. Accordingly, the number of lockers 2 available to users may be insufficient for the number of users present in a selected space. As such, in a situation where the number of lockers 2 is insufficient, the occurrence or increase in the number of lockers 2 that are not returned despite not being used may significantly reduce the operational efficiency and practical use of the entire lockers 2.

In this regard, in the locker system 1 according to an embodiment, the locker 2 may be automatically returned without the user taking a separate action to return the locker 2, such as requesting the return of the locker 2.

Referring again to FIGS. 1 to 3, the locker system 1 according to an embodiment may further include the locker detection unit 10 capable of detecting an internal state of the locker 2 and the user detection unit 20 capable of detecting a location of the user.

The locker detection unit 10 may be arranged in each of the plurality of lockers 2. The locker detection unit 10 may be arranged inside each of the plurality of lockers 2 and may detect an internal state of each of the plurality of lockers 2.

The locker detection unit 10 may detect whether the internal state of the locker 2 is an empty state. The internal state of the locker 2 being empty may be defined as being free of an object except for a basic structure arranged inside the locker 2, e.g., hanger rods, hangers, etc.

The locker detection unit 10 may be configured to identify an object inside the locker 2.

For example, the locker detection unit 10 may be configured to visually identify an inner side of the locker 2. For example, the locker detection unit 10 may include a camera module that photographs the inner side of the locker 2. Through the camera module, it is possible to identify whether the inner side of the locker 2 is empty or not, as well as an object left inside the locker 2.

For example, the locker detection unit 10 may include a distance measurement sensor configured to irradiate waves towards the inner side of the locker 2 and receive the reflected waves. The distance measurement sensor may be, but is not limited to, a time-of-flight (ToF) sensor configured to measure a distance by calculating a travel time of waves. The waves may be in various forms of waves, for example, but are not limited to, ultrasonic waves. The distance measurement sensor may be, but is not limited to, an ultrasonic sensor, and may include various forms of sensors provided to measure a distance in a non-contact manner, such as ultrasonic sensors, etc.

As described above, the locker detection unit 10 may include at least one of the camera module and the distance measurement sensor. However, the locker detection unit 10 is not limited to the camera module or the distance measurement sensor, and may be changed variously as long as the locker detection unit 10 may detect the inner side of the locker 2 in a non-contact manner.

The user detection unit 20 may detect the location of the user. The user detection unit 20 may detect the location of the user in a selected space. For example, the user detection unit 20 may detect whether the user leaving the selected space deviates from the location. The user detection unit 20 may detect whether the user is in a location-deviation state where the user leaves the selected space or a stay state where the user remains in the selected space. The selected space may be, but is not necessarily limited to, a space within the fitness center.

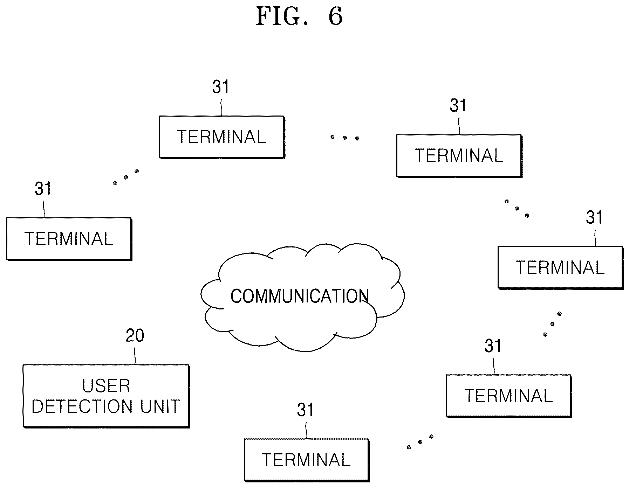

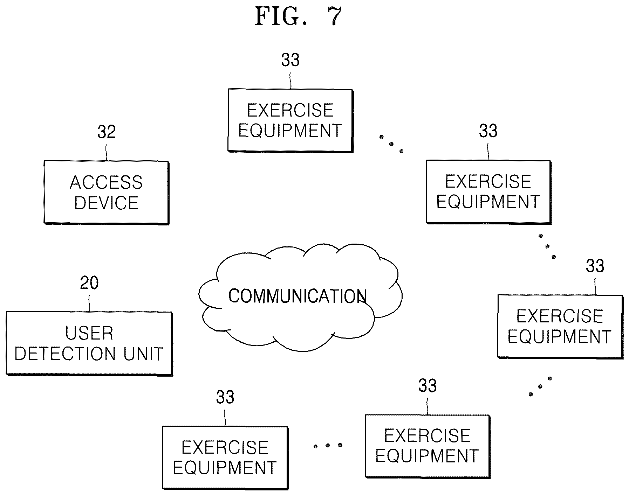

FIG. 6 is a view for describing an example of the user detection unit 20 of FIG. 1. FIG. 7 is a view for describing an example of the user detection unit 20 of FIG. 1.

Referring to FIGS. 6 and 7, the user detection unit 20 may be configured to directly detect the location of the user via the terminal 31 carried by the user, or indirectly detect the location of the user based on information of a facility within the selected space.

Referring to FIG. 6, the user detection unit 20 may directly detect the location of the user via the terminal 31 carried by the user. For example, the user detection unit 20 may detect the location of the user based on information received from the terminal 31.

The terminal 31 may be a device registered in the locker controller 5. The terminal 31 may be a terminal capable of transmitting and receiving data to and from the locker controller 5 and the user detection unit 20, via a wired or wireless network. The terminal 31 may include at least one of a portable terminal, a wearable device, a radio frequency identification (RFID) card, a near field communication (NFC) card, and a head-mounted display. However, the type of terminal 31 is not limited thereto, and any device that may be carried by the user may be sufficient.

The user detection unit 20 may receive location information of the terminal 31 and, based on the received location information of the terminal 31, may detect the location of the user. The user detection unit 20 may detect the user's location deviation, based on the location of the user detected through the terminal 31. For example, the user detection unit 20 may detect the user's location deviation, based on the user's location detected through the terminal 31, in case that the user leaves the selected space by a specific distance. For example, the user detection unit 20 may use the location information of the terminal 31 to detect the user's location deviation in case that the user leaves the selected space by a radius of 50 meters, 100 meters, or 200 meters. In another example, the user detection unit 20 may detect the user's location deviation, based on the user's location detected through the terminal 31, in case that the user leaves the selected space for a specific time. For example, the user detection unit 20 may use the location information of the terminal 31 to detect the user's location deviation in case that the user leaves the selected space for a specific time, e.g., 10 minutes, 30 minutes, or 60 minutes.

Referring to FIG. 7, the user detection unit 20 may indirectly detect the location of the user based on information detected from a facility within the selected space.

In an example, the facility within the selected space may include the access device 32 installed in the selected space. The access device 32 may detect user's exit information. The access device 32 may detect the user's exit information in various manners. For example, the access device 32 may detect the user's exit information via the user's tagging action and biometrics. For example, the access device 32 may recognize the user via an imaging module to detect the user's exit information. The access device 32 may transmit and receive data to and from the user detection unit 20 via a wired or wireless network.

The user detection unit 20 may detect whether the user leaves the selected space, that is, whether the user deviates from the location, based on the user's exit information detected by the access device 32. The user's exit information may include user's exit time. The user's exit information may include the time the user exits and a time elapsing from the time of exit. For example, based on the user's exit information, the user detection unit 20 may detect whether the user deviates from the location immediately after the user's exit, or may detect whether the user deviates from the location when a reference time has elapsed after the user's exit. The reference time after the exit may be at least 30 minutes. For example, the reference time after the exit may be 30 minutes to 3 hours.

In another example, the facility within the selected space may include the exercise equipment in the selected space. The exercise equipment 33 may be provided in plural.

The exercise equipment 33, which is a device for the exercise of the user, may be configured to detect the user's exercise. For example, the exercise equipment 33 may detect exercise information of the user. For example, the exercise information may include user's exercise time. For example, the exercise information may include end time at which the user finishes the exercise.

The exercise equipment 33 may transmit and receive data to and from the user detection unit 20 via a wired or wireless network.

The user detection unit 20 may detect the user's location deviation, based on the exercise information of the user detected by the exercise equipment 33. For example, the user detection unit 20 may detect the user's location deviation, based on the end time detected by the exercise equipment 33. For example, the user detection unit 20 may detect the user's location deviation in case that the time elapsing from the end time exceeds the reference time. For example, the reference time may be at least 30 minutes. The reference time may be 30 minutes to 3 hours.

In the embodiment described above, it is described that the user detection unit 20 detects the location of the user based on the information detected from each of the terminal 31, the access device 32, and the exercise equipment 33, but the disclosure is not limited thereto. The user detection unit 20 may detect the location of the user based on information detected from at least one of the terminal 31, the access device 32, and the exercise equipment 33. Furthermore, the user detection unit 20 may be changed variously as long as the user detection unit 20 is capable of detecting the location of the user.

Hereinafter, the locker system 1 including the above-described configuration and a locker management method for the locker 2 using the locker system 1 will be described.

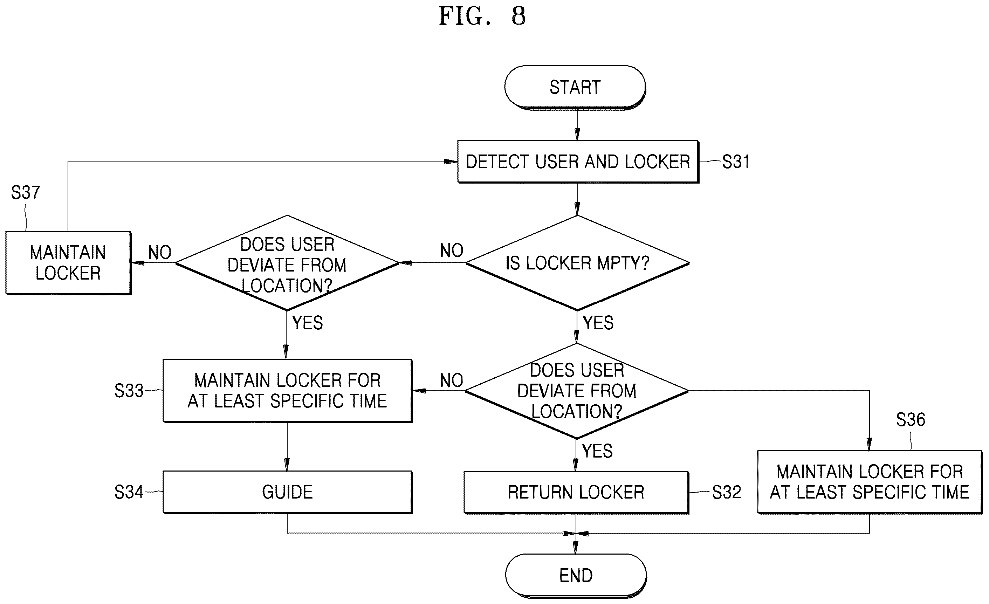

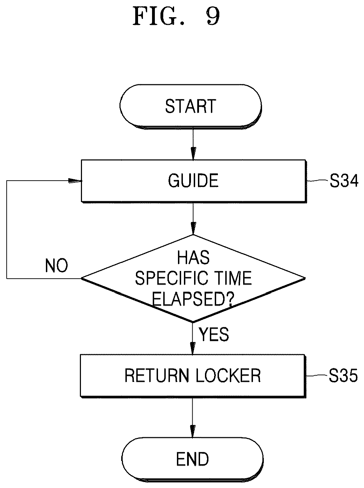

FIG. 8 is a flowchart schematically showing a locker management method for the locker 2 of the locker system 1 according to an embodiment. FIG. 9 is a flowchart schematically showing a process of returning the locker 2 after notification of a user or an administrator in a locker management method for the locker 2 according to an embodiment.

Referring to FIGS. 1 and 8, the locker system 1 according to an embodiment may selectively return the locker 2 assigned to the user via the user detection unit 20 and the locker detection unit10, even without a user's separate request to return the locker 2.

For example, the internal state of the locker 2 may be detected through the locker detection unit 10, and the location of the user may be detected through the user detection unit 20, in operation S31.

The user detection unit 20 may detect the location of the user and detect whether the user leaves the selected space. In case that the user's location deviation is detected by the user detection unit 20, the locker 2 may be selectively returned depending on the internal state of the locker 2.

For example, in case that the user's location deviation is detected and the empty state of the locker 2 is detected, the locker controller 5 may process the locker 2 assigned to the user into a returned state in which the locker 2 is assignable to another user, in operation S32. For example, the locker controller 5 may switch the locker 2 assigned to the user from the occupied state to the returned state. For example, the locker controller 5 may switch the locker 2 to the returned state and lock the locker 2 through the locking unit 3.

For example, in case that the user's location deviation is detected and a storage state in which an object is stored in the locker 2 is detected, the locker controller 5 may process the locker 2 into a state that is different from the returned state for at least a specific time. For example, the locker controller 5 may maintain the locker 2 in an existing state for at least a specific time, in operation S33. The locker controller 5 may maintain the locker 2 in the occupied state by the user for at least a specific time.

The locker controller 5 may provide the user or administrator with guidance information indicating that the locker 2 is in the storage state, in operation S34. Accordingly, the user or administrator may be guided to retrieve an object from the locker 2.

Referring to FIG. 9, the locker controller 5 may provide the guidance information and, after an elapse of a specific time, process the locker 2 into the returned state, in operation S35. This may allow the locker 2 to be managed to provide a time for the user or administrator to retrieve an object inside the locker 2, while still allowing the locker 2 to be available for use by another user after a specific time.

Referring again to FIG. 8, in case that the user's location deviation is not detected by the user detection unit 20, that is, in case that the user is detected in the stay state in which the user remains in the selected space, the locker controller 5 may process the locker 2 assigned to the user into a state different from the returned state.

For example, in case that the user is detected as being in the stay state despite the locker 2 being detected as being in the empty state, the locker controller 5 may not process the locker 2 into the returned state for at least a specific time. The locker controller 5 may maintain the locker 2 in the existing state for at least a specific time, in operation S36. For example, in case that the user is detected as being in the stay state despite the locker 2 being detected as being in the empty state, the locker controller 5 may maintain the locker 2 in the existing occupied state for at least 30 minutes. However, in case that the locker 2 remains empty for at least a specific time, e.g., at least 30 minutes, the locker controller 5 may process the locker 2 into the returned state. Accordingly, it is possible to prevent the assigned locker 2 from being returned against the user's intention.

For example, in case that the locker 2 is detected as being in the storage state and the user is detected as being in the stay state, the locker controller 5 may not process the locker 2 into the returned state. The locker controller 5 may maintain the locker 2 in the existing state, in operation S37.

As described above, in the locker system 1 according to the embodiment and the locker management method using the same, by including both the locker detection unit 10 and the user detection unit 20, it is possible to automatically return the locker 2 even in case that the user does not separately request the return, while reducing the situation in which the locker 2 is returned against the user's intention as much as possible.

In case that the locker system 1 does not include the user detection unit 20, the location of the user may not be identified, and as a result, the locker 2 may be returned against the user's intention, even in case that the user does not store anything in the locker 2 but intends to use the locker 2.

On the other hand, in case that the locker system 1 does not include the locker detection unit 10, the internal state of the locker 2 may not be identified, and as a result, in case that the user temporarily leaves an exercise facility while storing personal luggage (or object) in the locker 2, the locker 2 may be automatically returned against the user's intention. In this case, a dangerous situation may arise where users' personal belongings may be lost.

On the other hand, in the locker system 1 according to the embodiment and the locker management method using the same, by detecting the internal state of the locker 2 simultaneously with detecting the location of the user, it is possible to automatically return the locker 2 even in case that the user does not separately request the return, while reducing the situation in which the locker 2 is returned against the user's intention as much as possible.

While the foregoing description is made mainly on an example where the locker system 1 is used for the automatic return of the locker 2, the disclosure is not necessarily limited thereto. For example, the locker system 1 may, in addition to an automatic return function, provide information useful to the user or administrator by using the locker detection unit 10 and the user detection unit 20.

For example, the locker system 1 according to an embodiment may provide a guidance message to the user or administrator in case that an object is detected inside the locker 2 through the locker detection unit 10.

When the user enters a request to return the locker 2, in case that an object is detected inside the locker 2, the user may be provided with information indicating that the object is left inside the locker 2. Accordingly, during a return request process, the user may identify whether the object is inside the locker 2 and may prevent the object from being lost.

For example, in case that an object is detected inside the locker 2, the locker system 1 may provide the administrator with information indicating that the object is left inside the locker 2, even though the locker 2 has been returned in response to the user's request to return the locker 2. Hence, the administrator may either notify the user of presence of the object or directly retrieve the object of the user.

By automatically returning the locker 2 through the locker system 1 described above, smooth management of the locker 2 may be possible even in case that a small area of the locker 2 is used within a selected space. For example, the locker system 1 according to an embodiment may enable the use of the locker 2 without inconvenience to the user, even in case that the number of lockers 2 is small. For example, even in case that the area occupied by the plurality of lockers 2 is 10% or less of the total area of the selected space, such as a fitness center, the lockers 2 may be used without inconvenience to the user.

Other aspects, features, advantages, and advantages other than those described above will become apparent from the following figures, claims, and the detailed description of the disclosure. These general and specific aspects may be carried out using a system, a method, a computer program, or any combination of thereof.

A locker system and a locker management method according to an embodiment may selectively perform a return procedure for a locker according to an internal condition of the locker when a user leaves a selected space without a separate return.

The locker system and the locker management method according to an embodiment may automatically process a return even when a user does not separately request the return, while minimizing the return being processed against a user's intention.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A locker system that manages a plurality of lockers in a selected space, the locker system comprising:
a locker controller configured to assign an available locker among the plurality of lockers to a user;
a locker detection unit configured to detect an internal state of the locker assigned to the user; and
a user detection unit configured to detect a location of the user within the selected space,
wherein the locker controller is further configured to, based on detection results of the locker detection unit and the user detection unit, automatically return the locker assigned to the user.

2. The locker system of claim 1, wherein the user detection unit is further configured to detect whether the user leaving the selected space deviates from a location.

3. The locker system of claim 2, wherein the locker controller is further configured to process the locker assigned to the user into a returned state in which the locker is assignable to another user, in response to the locker detection unit detecting an internal state of the locker as an empty state and the user detection unit detecting the user's location deviation.

4. The locker system of claim 3, wherein the locker controller is further configured to maintain the locker assigned to the user in an existing state for at least a specific time, in response to the locker detection unit detecting an internal state of the locker as a storage state in which an object is stored and the user detection unit detecting the user's location deviation.

5. The locker system of claim 4, wherein the locker controller is further configured to provide the user or an administrator with guidance information indicating that the object is stored in the locker.

6. The locker system of claim 5, wherein the locker controller is further configured to process the locker into the returned state after an elapse of a specific time from the providing of the guidance information.

7. The locker system of claim 3, wherein the locker controller is further configured to maintain the locker assigned to the user in an existing state for at least a specific time, in response to the locker detection unit detecting an internal state of the locker as an empty state and the user detection unit not detecting the user's location deviation.

8. The locker system of claim 1, wherein the locker detection unit comprises at least one of a camera module and a distance measurement sensor.

9. The locker system of claim 1, wherein the user detection unit is further configured to directly detect a user's location through a terminal carried by the user or indirectly detect the user's location through a facility in the selected space.

10. The locker system of claim 9, wherein the user detection unit is further configured to detect the user's location deviation, based on the user's location detected through the terminal, in response to the user leaving the selected space by a specific distance.

11. The locker system of claim 9, wherein the facility comprises an access device that detects exit information of the user, and
the user detection unit is further configured to detect a location deviation of the user, based on the exit information detected by the access device.

12. The locker system of claim 9, wherein the facility comprises exercise equipment configured to detect exercise information of the user, and
the user detection unit is further configured to detect a location deviation of the user, based on the exercise information detected by the exercise equipment.

13. A locker management method for managing a plurality of lockers in a selected space, the locker management method comprising:
detecting an internal state of a locker assigned to a user and detecting a location of the user; and
automatically processing whether the locker is returned, based on a result of detecting the internal state of the locker and a result of detecting the location of the user.

14. The locker management method of claim 13, wherein the detecting of the internal state of the locker comprises detecting whether the internal state of the locker is an empty state, and the detecting of the location of the user comprises detecting whether the user is in a deviation state of deviating from a selected space, and
the automatically processing comprises:
processing the locker assigned to the user into a returned state in which the locker is assignable to another user, in response to the locker being detected as being in the empty state and the user being detected as being in the deviation state;
maintaining the locker assigned to the user in an existing state for at least a specific time, in response to the internal state being detected as being a storage state in which an object is stored and the user being detected as being in the deviation state; and
maintaining the locker assigned to the user in the existing state for at least a specific time, in response to the locker being detected as being in the empty state and the user being detected as being in a stay state in which the user remains in the selected space.

15. The locker management method of claim 14, further comprising providing the user or an administrator with guidance information indicating that the object is stored in the locker, in response to the object being in the storage state and the user being detected as being in the deviation state.
